Europäisches Patentamt

European Patent Office

Office européen des brevets

(11) Publication number: **0 208 991**
A2

# EUROPEAN PATENT APPLICATION

(21) Application number: 86108995.1

(22) Date of filing: 02.07.86

(51) Int. Cl.⁴: **H 04 Q 3/00, H 04 M 11/08, H 04 N 7/14**

(30) Priority: 10.07.85 JP 150198/85

(71) Applicant: HITACHI, LTD., 6, Kanda Surugadai 4-chome Chiyoda-ku, Tokyo 100 (JP)

(43) Date of publication of application: 21.01.87 Bulletin 87/4

(72) Inventor: Takasaki, Yoshita, 5-12-12, Nakaarai, Tokorozawa-shi Saitama-ken (JP)

(74) Representative: Altenburg, Udo, Dipl.-Phys. et al, Patent- und Rechtsanwälte Bardehle-Pagenberg-Dost-Altenburg-Frohwitter & Partner Postfach 86 06 20, D-8000 München 86 (DE)

(84) Designated Contracting States: DE FR GB

(54) Line switching method and system.

(57) In a method of connecting broad-band signals to subscribers by line switching equipment, a line switching method characterized in that the broadband signal and narrow-band signal are transmitted between subscribers and the line switching equipment, a line switching connection signal is contained in the narrow-band signal, the broad-band signal and the narrow-band signal are separated from each other by the line switching equipment, line switching is made while the narrow-band signal is connected in such a manner as to connect and disconnect the broad-band signals at an arbitrary timing from the subscriber, transmission between the line switching equipment is made by use of mutually different transmission lines for the narrow-band signal and for the broad-band signal, after transmission, predetermined line switching corresponding to the transmitting side is made by the line switching equipment on the receiving side, and then the narrow-band signal and the broad-band signal are combined and transmitted to the subscriber.

Hitachi, Ltd.

June 30, 1986
H 7189-EP    hod

S P E C I F I C A T I O N

TITLE OF THE INVENTION:

LINE SWITCHING METHOD AND SYSTEM

BACKGROUND OF THE INVENTION

Field of the Invention

This invention relates generally to a line switching method and system for transmitting broad-band signals such as video signals with audio signals.

Description of the Prior Art

An example of video signal transmission systems is described in " Shisetsu " Vol. 35, No. 4, p.p. 103-113.

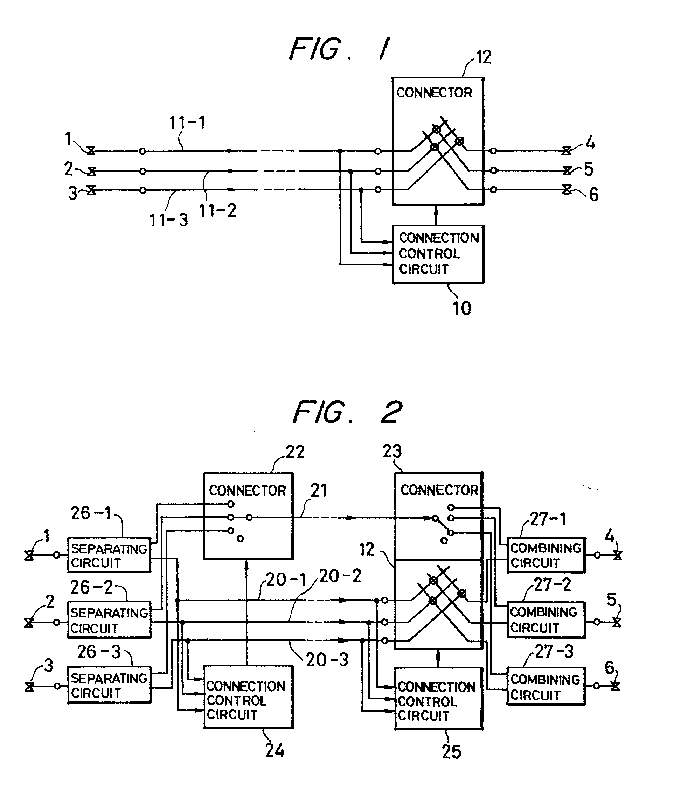

Fig. 1 of the accompanying drawings shows the construction of the conventional systems of this kind. Subscribers 1-3 and 4-6 handling broadband signals such as television telephone are connected by switching equipment 12 through transmission lines 11-1~11-3. Though this drawing shows only one-way transmission, transmission is made in practice in the opposite direction, too, by the same construction. A switching control circuit 10 picks up a connection call signal from a particular subscriber and controls the connecting equipment 12. Circle ◯ at the cross point in the switching equipment 12 represents the connection state. In this case,

0208991

- 2 -

the subscribers 1, 2 and 3 are connected to 5, 6 and 4, respectively.

When a broad-band signal is transmitted in the conventional system described above, the transmission line itself is expensive and this is an economical bottle-neck for the penetration of the system. Therefore, communication time must be reduced in-order to minimize a toll fee. In such a case, however, the ratio of the communication time to a connection time becomes small because the time necessary for connecting the lines cannot be reduced so easily, so that efficiency drops and this is a critical practical problem.

SUMMARY OF THE INVENTION

The present invention contemplates to provide a line switching method and system which eliminates the problems of the prior art system described above, reduces the connection time in comparison with the communication time and accomplishes economical communication of broad-band signals.

In order to accomplish the object described above, the present invention divides communication signals into broad-band signals and narrow-band signals and lets the narrow-band signal contain the connection signal. Furthermore, in accordance with the present invention, the narrow-band signal is kept connected for a relatively long period while the broad-band signal can be connected and disconnected at an arbitrary timing within the retention time of the narrow-band signal.

BRIEF DESCRIPTION OF THE DRAWINGS

Fig. 1 is a structural view of a conventional signal transmission system;

Fig. 2 is a structural view of a signal transmission system in accordance with one embodiment of the present invention;

Fig. 3 is a structural view of a switch portion of the connecting equipment shown in Fig. 2;

Figs. 4(a) and 4(b) are structural views of a connection control circuit and connecting equipment on the transmiting side in Fig. 2;

Fig. 5 is a structural view of an example of a priority deciding circuit shown in Fig. 4(a);

Figs. 6 and 7 are structural views of the connection control circuit and the connecting equipment on the receiving side in Fig. 2, respectively; and

Figs. 8(a) and 8(b) are structural views of the detector shown in Fig. 6, respectively.

DESCRIPTION OF THE PREFERRED EMBODIMENTS

Fig. 2 shows a signal transmission system in accordance with one embodiment of the present invention.

- 4 -

Though the drawing shows only one-way transmission, transmission is actually made in the opposite direction, too, by the same construction.. The signals from subscribers 1-3 from television telephones or the like are separated into broadband signals and narrow-band signals by separating circuits 26-1～26-3. Video signals are used as the broadband signals, while various connection signals such as pilot signals that represent the subscriber's number to be connected on the receiving side and pilot signals that represent the existence of the video signals, and the like, are used together with the audio signals as the narrow-band signals. The narrow-band signals are connected to the subscribers 4-6 by a connection 12 through narrow-band transmission lines 20-1～20-3 in the same way as in the prior art system. The broad-band signals pass through a connector 22, a broad-band transmission line 21 and a connector 23 and are combined with the narrow-band signals by a combining circuit 27.

Incidentally, the number of transmission lines 21 for the broadband signals is smaller than that of the narrow-band transmission lines 20-1～20-3, and only one line is shown used in this embodiment. However, a necessary number of transmission lines 21 are prepared in accordance with the band used of the broadband transmission lines 21. In other words, the broadband transmission signals are connected or disconnected, whenever necessary, during the connection of the narrow-band signals. It will be assumed, for example, that the subscribers 2 and 6 communicate with each other by the narrow-band signals for 5 minutes as shown in the drawing, and connection of the broad-band signals such as video signals becomes necessary for 30 seconds in the interim. In this case, the subscriber 2 raises a broad-band connection call signal, and the broad-band transmission line 21 is connected for a necessary period of time by controlling the connectors 22 and 23 by connection control circuits 24 and 25. The time necessary for this connection and disconnection is extremely short. This is because the subscribers 2 and 6 have already been connected by the narrow-band circuit, and the procedures for connection (such as dialing, call request, response, etc) can be eliminated.

The use of the broadband transmission line 21 is reduced as short as possible in order to save the toll fee so that even when the line is conjointly used by a plurality of subscribers, a waiting time is relatively short and there is no practical problem.

- 6 -

In Fig. 2, a filter, for example, is used as the separating circuit 26, which separates the broad-band signals consisting of video signals from the narrow-band signals consisting of audio signals, transmits the video signals through the connector 22 to the transmission line 21 and delivers the audio signals to the transmission line 20.

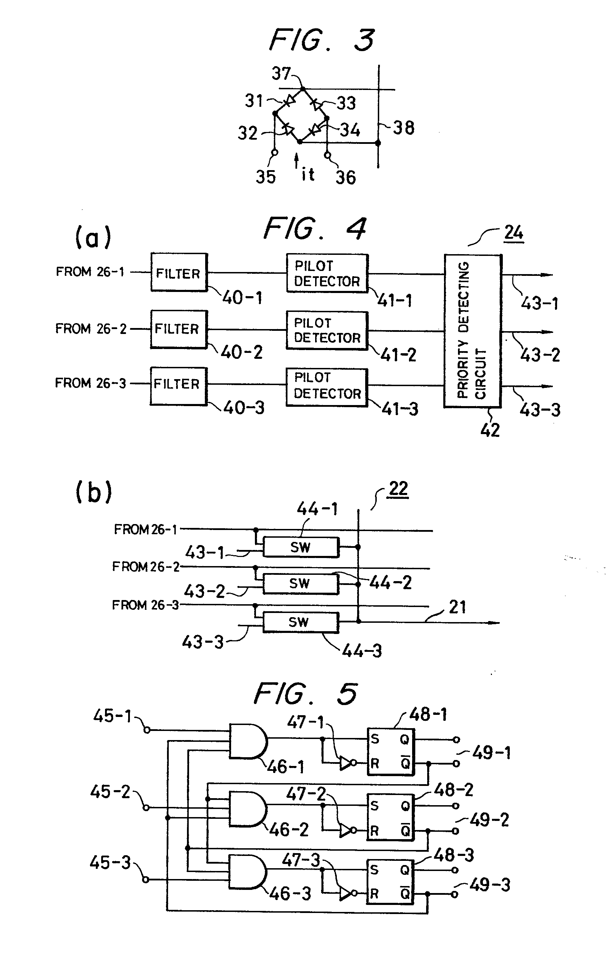

Fig. 3 shows an example of the construction of each switch portion in the later-appearing connectors 12, 22 and 23. Each switch consists of diodes 31 - 34 connected in bridge and voltage application terminals 35 and 36. When a negative voltage (B-) and a positive voltage (B+) are applied to these terminals, respectively, the diode bridge 31-34 becomes conductive and the signal lines 37 and 38 are connected to each other. This also holds true of the connectors 22 and 23.

Since the transmission line 21 passes the broad-band signals such as the video signals, a pair cable is used in the case of short distance communication and a coaxial cable or an optical fiber, for long distance communication.

The combining circuit 27 can be accomplished by use of a mere addition circuit.

Figs. 4(a) and 4(b) show an example of the connection control circuit 24 and the connector 22 on the

- 7 -

transmission side shown in Fig. 2, respectively.

In the connection control circuit 24 shown in Fig. 4(a), the pilot signals PV that are sent from the subscribers 1 - 3 and indicate the existence of the video signals are detected by filters 40-1 ～ 40-3 and pilot detectors 41-1～ 41-3, and the result of detection is applied to a priority deciding circuit 42. If there are two or more inputs to this circuit, the circuit preferentially generates the output for the earlier input.

The connector 22 shown in Fig. 4(b) has switches 44-1～ 44-3 corresponding to the subscribers 1 - 3 respectively, and opens anyone of these switches 44-1～ 44-3 in accordance with the corresponding outputs 43-1～ 43-3 of Fig. 4(a).

Fig. 5 shows an exemplary construction of the priority deciding circuit 42 shown in Fig. 4(a). This circuit consists of terminals 45-1～ 45-3 to which the outputs of the pilot detectors 41-1～ 41-3 are applied, AND gates 46-1～ 46-3, inverters 47-1～ 47-3, flip-flops 48-1～ 48-3 and output terminals 49-1～ 49-3. Each of the switches 44-1～ 44-3 shown in Fig. 4(b) is constructed in such a fashion as shown in Fig. 3, for example.

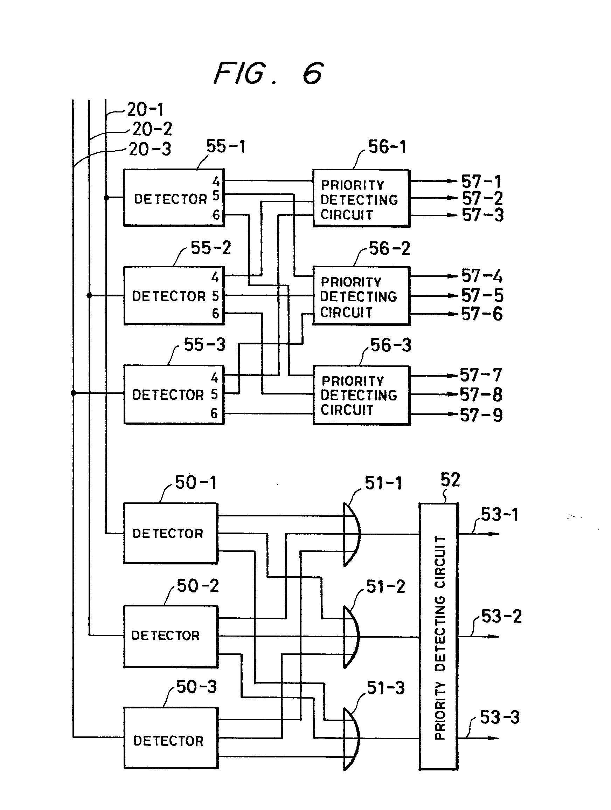

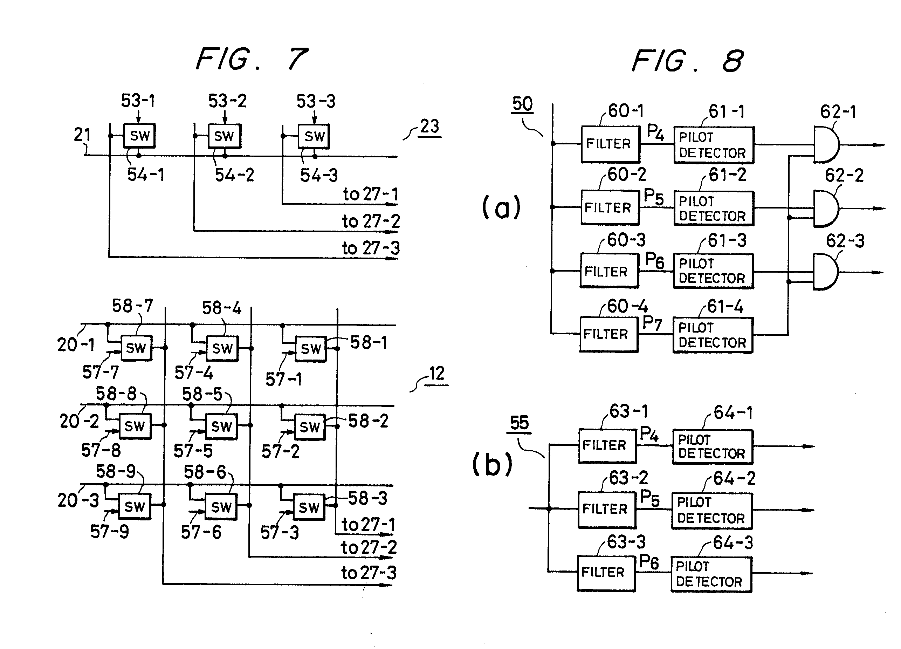

Figs. 6 and 7 show an exemplary construction of the connection control circuit 25 and the connectors 12, 23 on the receiving side shown in Fig. 2, respectively.

In the connection control circuit 25 shown in Fig. 6, the pilot signals $P_4$ - $P_6$ sent from the subscribers 1 - 3, respectively through the transmission line 20 and representing the subscribers' numbers on the receiving side, as well as the pilot signals PV representing the existence of the video signals are applied to the priority deciding circuit 52 through detectors 50-1∼50-3 (whose details are shown in Fig. 8(a)) in order to detect which transmitler intends to transmit a video signal with which destination. The results are applied to OR gates 51-1∼51-3 in order to obtain outputs 53-1∼53-3 which determine the subscriber to whom the video signals are to be transmitted.

The connector 23 shown in Fig. 7 consists of switches 54-1∼ 54-3 and these switches are closed by the outputs 53-1∼53-3 of Fig. 6, respectively. On the other hand, in Fig. 6, the pilot signals $P_4$ - $P_6$ are detected by the detectors 55-1∼55-3, their outputs are applied to the priority deciding circuits 56-1∼56-3, thereby obtaining the outputs 57-1∼57-9. These outputs are applied to the switches 58-1∼58-9 of the connector 12 shown in Fig. 7 in order to open and close the switches.

Figs. 8(a) and 8(b) show exemplary constructions of the detectors 50 and 55 shown in Fig. 6, respectively.

The detector 50 consists of filters 60-1 ~ 60-3 that pass the pilot signals $P_4$ - $P_6$ therethrough, respectively, a filter 60-4 that passes the pilot signal PV therethrough, pilot detectors 61-1 ~ 61-4 and AND gates 62-1 ~ 62-3. The detector 55 consists of filters 63-1 ~ 63-3 that pass the pilot signals $P_4$ - $P_6$ therethrough and pilot detectors 64-1 ~ 64-3.

Though the foregoing description deals with the system which controls connection and disconnection of the broadband signals from the subscribers on the transmiting side, control can of course be made from the subscribers on the receiving side or from the subscribers on both the transmission and receiving sides because the signals are transmitted to and from both sides.

Though the foregoing description deals with the embodiment wherein line switching is effected on the space division basis, the same effect can be obtained obviously by effecting line switching on the time division basis by the use of digital signals.

As described above, the present invention can reduce the connection time of the broadband signals in comparison with the exchange time, can transmit economically the broadband signals and hence provides great practical effects.

- 10 -

What is claimed is:

1.  A line switching method in a system wherein signals containing both broadband and narrow-band signals are exchanged between subscribers through a line switching apparatus, said line switching method characterized in that said signals are transmitted to said line switching apparatus on the receiving side from the subscribers, said signals are then separated into said broadband signals and said narrow-band signals by said line switching apparatus and are sent to a line switching apparatus on the receiving side through mutually different transmission lines, and said line switching apparatus on the reception side effects predetermined line switching in a manner corresponding to said line switching apparatus on the transmission side, then combines said broadband signals and said narrow-band signals and sends them to the subscribers.

2.  A line switching method according to claim 1, wherein a control signal for line switching is delivered while being contained in said narrow-band signal.

3.  A line switching method according to claim 1 or 2, wherein said broadband signal consists of a video signal while said narrow-band signal consists

0208991

- 11 -

of an audio signal.

4. A line switching system comprising:

first and second subscriber groups;

means for separating signals from said first subscriber group into broadband signals and narrow-band signals;

a plurality of first transmission lines disposed for the respective subscribers of said first subscriber group, and transmitting said narrow-band signals of the respective subscribers separated by said separation means;

a second transmission line for transmitting said broadband signals;

first connection means for selecting any one of the subscribers of said first subscriber group, and sending said broadband signal corresponding to the selected subscriber and separated by said separation means to said second transmission line;

line switching means for switching and connecting said first transmission lines to the subscribers of said second subscriber group;

second connection means for selecting and connecting said second transmission lines to any one of the subscribers of said second subscriber group; and

combination means, disposed for each subscriber of said second subscriber group, for adding said narrow-band signal from said line switching means to said broadband signal from said second connection means, and sending the addition signal to the subscriber of said second subscriber group.

5. A line switching system according to claim 4, wherein each of the subscribers of said first subscriber group sends a control signal for subscriber connection while said control signal is being contained in said narrow-band signal.

6. A line switching system according to claim 5, wherein said broad-band signal consists of a video signal and said narrow-band signal consists of an audio signal.

FIG. 1

FIG. 2

1/4

## FIG. 3

## FIG. 4

(a)

FROM 26-1 → FILTER 40-1 → PILOT DETECTOR 41-1 → PRIORITY DETECTING CIRCUIT 24 → 43-1

FROM 26-2 → FILTER 40-2 → PILOT DETECTOR 41-2 → 43-2

FROM 26-3 → FILTER 40-3 → PILOT DETECTOR 41-3 → 43-3

42

(b)

FROM 26-1 → SW 44-1 → 22

43-1

FROM 26-2 → SW 44-2

43-2

FROM 26-3 → SW 44-3 → 21

43-3

## FIG. 5

45-1 → 46-1 → 47-1 → 48-1 (S Q / R Q̄) → 49-1

45-2 → 46-2 → 47-2 → 48-2 (S Q / R Q̄) → 49-2

45-3 → 46-3 → 47-3 → 48-3 (S Q / R Q̄) → 49-3

## FIG. 6

FIG. 7

FIG. 8